(19) Europäisches Patentamt / European Patent Office / Office européen des brevets

(11) **EP 3 146 176 B1**

(12) **FASCICULE DE BREVET EUROPEEN**

(45) Date de publication et mention de la délivrance du brevet:
**05.06.2019 Bulletin 2019/23**

(21) Numéro de dépôt: **15720374.6**

(22) Date de dépôt: **09.04.2015**

(51) Int Cl.:
*F01N 11/00* *(2006.01)*　　*F02D 41/22* *(2006.01)*
*F02D 41/30* *(2006.01)*

(86) Numéro de dépôt international:
**PCT/FR2015/050921**

(87) Numéro de publication internationale:
**WO 2015/177420 (26.11.2015 Gazette 2015/47)**

(54) **PROCÉDÉ DE DIAGNOSTIC DE L'EFFICACITÉ D'UN CATALYSEUR TROIS VOIES**

VERFAHREN ZUR DIAGNOSTIZIERUNG DER EFFIZIENZ EINES DREIWEGE-KATALYSATORS

METHOD FOR DIAGNOSING THE EFFICIENCY OF A THREE-WAY CATALYTIC CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2014 FR 1454439**

(43) Date de publication de la demande:
**29.03.2017 Bulletin 2017/13**

(73) Titulaire: **Renault S.A.S.**
**92100 Boulogne-Billancourt (FR)**

(72) Inventeurs:
 • **AVONS, Vincent Pierre**
 **F-75014 Paris (FR)**
 • **HARTER, Cédric**
 **F-91150 Etampes (FR)**

(56) Documents cités:
**EP-A2- 0 547 326**　　**US-A- 5 945 597**
**US-B1- 6 470 674**

**Description**

La présente invention concerne un procédé de diagnostic d'un catalyseur d'un système de traitement des gaz d'échappement équipant une ligne d'échappement d'un moteur à combustion interne à allumage commandé, ledit système étant du type comprenant une première et une seconde sonde à oxygène implantées respectivement en amont et en aval dudit catalyseur dans ladite ligne d'échappement.

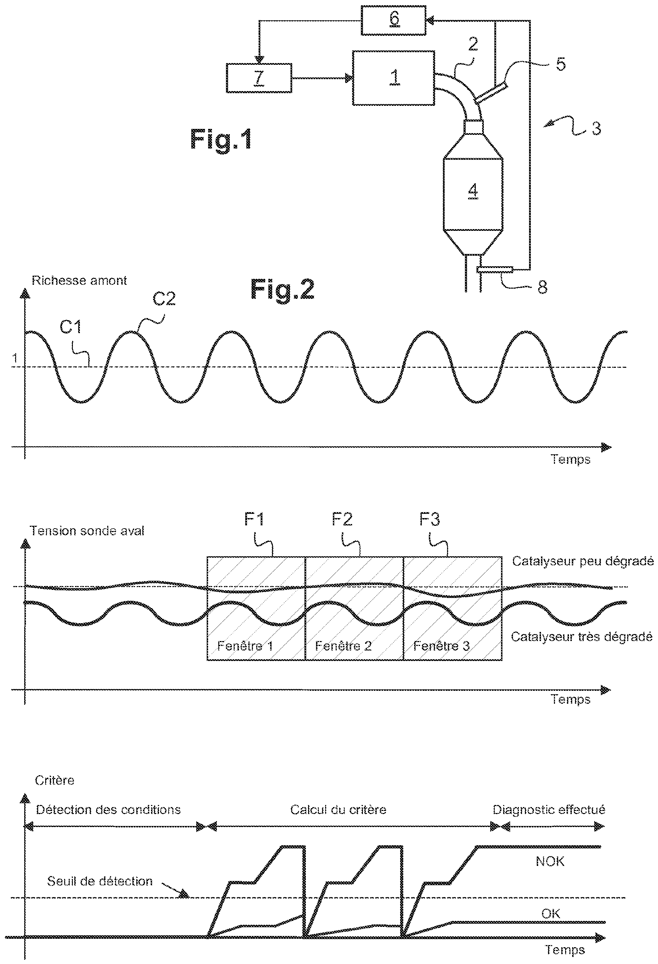

Comme illustré schématiquement à la figure 1, un moteur à combustion interne 1 d'un véhicule automobile est pourvu d'une ligne d'échappement 2 pour évacuer vers l'extérieur des gaz d'échappement produits par le moteur à combustion interne 1. Pour réduire la pollution de l'atmosphère par les gaz d'échappement des moteurs à combustion interne des véhicules automobiles, il est courant d'équiper la ligne d'échappement d'un système 3 de traitement des gaz d'échappement dont la fonction est de transformer les composants chimiques nocifs émis par la combustion en substances non polluantes au moyen d'un procédé de catalyse. Pour ce faire, le système 3 de traitement des gaz d'échappement comprend classiquement un catalyseur 4, dit à trois-voies, qui assure une triple fonction d'oxydation des hydrocarbures imbrûlés (HC), d'oxydation du monoxyde de carbone (CO) en dioxyde de carbone ($CO_2$) et de réduction des oxydes d'azote (NOx) en azote gazeux ($N_2$).

Une sonde à oxygène (ou lambda) 5 est généralement placée en amont du catalyseur trois voies 4, selon un sens d'écoulement des gaz d'échappement à l'intérieur de la ligne d'échappement 2 et délivre une tension en fonction de la richesse du mélange, le signal ainsi fourni donnant la possibilité à une unité de commande 6, assurant la régulation électronique du moteur, de contrôler la proportion du mélange air-carburant pour laquelle l'efficacité du moteur 1 sera optimale, par une commande appropriée des moyens d'injection 7 du moteur 1. Cela permet un faible niveau de rejets polluants et éventuellement une consommation réduite. Sur les systèmes de traitement des gaz d'échappement compatibles avec les normes antipollution en vigueur applicables aux véhicules automobiles en Europe, en plus de cette première sonde 5, dite sonde amont, une seconde sonde lambda 8 est placée en aval du catalyseur. Cette seconde sonde 8, dite sonde aval, est également reliée à l'unité de commande 6 et permet d'évaluer l'efficacité du catalyseur 4 en permanence.

En effet, un catalyseur défaillant ne contrôle plus les émissions de gaz d'échappement et rend le véhicule plus polluant. Il risque donc de ne plus respecter les normes en cas de contrôle routier ou du contrôle technique.

Aussi, il est nécessaire de pouvoir diagnostiquer l'efficacité de conversion d'un catalyseur trois voies monté en aval d'un moteur à allumage commandé et ainsi permettre d'avertir le conducteur que son véhicule ne permet plus de respecter les seuils d'émissions polluantes fixées par les normes.

On connaît notamment des systèmes de diagnostics basés sur le comportement de la sonde aval pour différents profils de richesse du mélange en amont du catalyseur. Ainsi, le document de brevet FR 2 910 052 propose d'enrichir le mélange nominal de quelques dixièmes de richesse et de constater l'amplitude de la sur-oscillation de tension (variation dynamique de la sonde aval) et l'écart de tension pouvant être observé par rapport à la tension obtenue avec un bon catalyseur sur le même type d'enrichissement (variation statique de la sonde aval).

On connaît également du document de brevet US 8 011 173 une méthode de diagnostic utilisant le signal de tension de la sonde sonde aval, dans laquelle on établit une première valeur de capacité de stockage en oxygène OSC du catalyseur en surveillant la variation du signal quand on enrichit le mélange, on établit une deuxième valeur d'OSC quand on appauvrit le mélange, on établit une troisième valeur d'OSC quand on module la richesse du mélange entre « plus ou moins riche », et on établit enfin un diagnostic du catalyseur à partir du rapport de deux de ces valeurs d'OSC parmi les trois.

On connaît encore du document de brevet EP 0 823 546 un dispositif de diagnostic comprenant une sonde amont et aval, et des moyens grâce auxquels on calcule le rapport de la longueur de la courbe de réponse de sortie de la sonde aval par rapport à la longueur de la courbe de réponse de sortie de la sonde amont, dit autrement les longueurs des créneaux de richesse, on calcule le rapport des fréquences de ces mêmes courbes de réponse, et on établit un diagnostic positif quand le rapport des longueurs est supérieur à un premier seuil et que le rapport des fréquences est supérieur à un troisième seuil, et quand le rapport des longueurs est supérieur à un deuxième seuil inférieur au premier seuil et que le rapport des fréquences et supérieur au troisième seuil.

Or, ces solutions nécessitent de solliciter des demandes de modifications d'état de richesse du mélange lors du déroulement du diagnostic. Les consignes d'injections sont donc changées lors de ces sollicitations, ce qui a un impact défavorable sur le fonctionnel, sur les émissions polluantes, ainsi que sur l'agrément client.

Le document US 5 945 597 fait connaître un procédé consistant à diagnostiquer le catalyseur sur la base du signal de la sonde aval dans des conditions particulières d'observation correspondant à une régulation permettant de garder un mélange stoechiométrique en moyenne tandis qu'on impose alternativement un mélange riche et pauvre en amont du catalyseur.

Il existe un besoin pour pouvoir diagnostiquer le fonctionnement du catalyseur de façon non intrusive et, en particulier, pour pouvoir discriminer efficacement des états de fonctionnement du catalyseur sans imposer de changement de consigne de richesse lors du diagnostic.

Ce but est atteint grâce à un procédé de diagnostic d'un catalyseur selon la revendication 1.

Ainsi, la régulation de richesse en amont du catalyseur permet de réguler la richesse sur la richesse idéale grâce à la consigne de régulation de richesse permettant de garder un mélange stoechiométrique en moyenne, de sorte que la mise en oeuvre du diagnostic est sans impact sur les émissions polluantes, tandis que l'oscillation de régulation permet de moduler ladite consigne de façon à faire travailler le catalyseur dans toute sa fenêtre catalytique, en imposant alternativement un mélange riche puis pauvre en amont du catalyseur, sans pour autant sortir de cette fenêtre catalytique. Par conséquent, le catalyseur est censé agir comme un filtre sur la richesse en absorbant toutes les modulations de richesse résultant de l'oscillation de régulation appliquée à la consigne de régulation et en laissant donc la richesse en aval du catalyseur quasiment constante. L'invention tire alors avantageusement partie du fait que, plus le catalyseur vieillit, plus sa fenêtre catalytique s'amenuise du fait de la perte en capacité de stockage en oxygène. Dans ces conditions, les oscillations de régulations ne peuvent plus être totalement absorbées par le catalyseur et des oscillations de la richesse en aval peuvent donc être observées au moyen de l'analyse du signal fourni par la sonde aval, révélatrices d'un niveau de dégradation du fonctionnement du catalyseur.

De préférence, on filtre passe-bas le signal fourni par la sonde aval, on détermine les valeurs maximale et minimale du signal filtré passe-bas pour chaque fenêtre temporelle de diagnostic, et on détermine le critère de détection d'état sur chaque fenêtre temporelle de diagnostic comme la différence entre lesdites valeurs maximale et minimale du signal filtré passe-bas de la sonde aval.

Avantageusement, la fréquence de coupure du filtre passe-bas appliqué au signal fourni par la sonde aval est égale à la fréquence de ladite oscillation de régulation appliquée à la consigne de régulation.

De préférence, on réalise au moins une itération du diagnostic.

Avantageusement, on maintient un point de fonctionnement constant du moteur pendant le diagnostic.

Le procédé de diagnostic décrit ci-dessus peut être mis en oeuvre par des moyens numériques de traitement, par exemple un microprocesseur, un microcontrôleur ou autre.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 illustre de façon schématique une architecture d'un moteur à combustion interne à allumage commandé avec son système de traitement des gaz d'échappement ;
- la Figure 2 est un schéma illustrant le principe de fonctionnement du diagnostic du catalyseur par mesure de l'activité de la sonde aval ;
- la Figure 3 est un organigramme illustrant la mise en oeuvre de la stratégie de diagnostic du catalyseur selon un mode de réalisation de l'invention.

La stratégie de diagnostic selon la présente invention s'applique à l'architecture déjà décrite en référence à la figure 1 et cherche à définir des conditions optimales d'observation de l'activité de la sonde aval 8 permettant de discriminer efficacement des états de fonctionnement bon ou mauvais du catalyseur sans imposer de changement de consigne de richesse lors du diagnostic.

Pour ce faire, comme illustré en Figure 2, la régulation de richesse est basée sur une consigne de régulation de richesse C1 permettant de commander une richesse amont optimale avec un coefficient lambda égal à 1, sur laquelle est appliquée une oscillation de régulation C2, définissant des créneaux de modulation apte à moduler la richesse du mélange air-carburant dans le faible intervalle de valeur de la fenêtre catalytique, typiquement $\pm 2\%$ de la valeur optimale, correspondant à la plage de richesse où l'efficacité du catalyseur est maximale. La consigne permet donc de garder un mélange stoechiométrique en moyenne tandis que l'oscillation de régulation sert à faire travailler le catalyseur dans toute sa fenêtre catalytique en imposant alternativement un mélange riche puis pauvre en amont du catalyseur.

La période de l'oscillation de régulation appliquée à la consigne est fixe et son amplitude est fonction du débit de gaz à l'échappement. Plus précisément, conformément au principe exposé ci-dessus, la valeur de cette amplitude est calibrée de façon à utiliser toute la plage de valeurs de la fenêtre catalytique sans pour autant sortir de cette fenêtre catalytique. En effet, si le mélange était trop riche, tout l'oxygène stocké dans le catalyseur serait consommé, engendrant des émissions de HC et de CO plus importantes. Au contraire, un mélange trop pauvre saturerait le catalyseur en oxygène et les NOx ne seraient plus traités convenablement. En restant dans la fenêtre catalytique visée, le taux d'oxygène en aval reste constant.

Un chronogramme du signal de tension fourni par la sonde aval est illustré à la figure 2, en regard du signal de régulation de la richesse amont. Une étude fréquentielle du signal de la sonde aval permet de montrer que l'harmonique prépondérante du signal est calée sur la fréquence d'oscillation de régulation de la richesse amont. Comme expliqué plus haut, plus un catalyseur vieillit, plus sa fenêtre catalytique s'amenuise du fait de la perte en capacité de stockage en oxygène. Les créneaux de modulation de richesse amont ne pouvant alors plus être totalement absorbés par le catalyseur, des oscillations de la richesse en aval peuvent donc être observées au travers du signal de la sonde aval.

Le chronogramme du signal de la sonde aval illustré à la figure 2 montre ainsi la différence sur le signal de tension de la sonde aval pouvant être observée entre deux états de catalyseur, respectivement un état correspondant à un catalyseur peu dégradé et un état correspondant à un catalyseur très dégradé.

Un diagnostic de l'efficacité du catalyseur peut donc être établi en se basant sur l'exploitation de la variation du signal fourni par la sonde aval, dans les conditions précises d'observation imposées par la régulation de richesse du moteur telle qu'elle a été exposée plus haut. Pour ce faire, une unité de diagnostic (non représenté à la figure 1) est couplée ou est intégrée à l'unité de commande 6 du moteur à laquelle est aussi reliée la sonde aval.

Selon un mode de réalisation du diagnostic mis en oeuvre par l'unité de diagnostic, on définit des fenêtres temporelles de diagnostic, par exemple trois fenêtres F1, F2 et F3 comme illustré à la figure 2, chacune d'une durée équivalente à la période de l'oscillation de régulation appliquée à la consigne de richesse amont, et on détermine un critère de détection d'état à partir de la variation du signal de la sonde aval sur chaque fenêtre temporelle de diagnostic, basé sur l'amplitude maximale du signal de la sonde aval sur chaque fenêtre temporelle de diagnostic.

Ainsi, si la valeur de l'amplitude maximale dépasse un seuil de détection, la sonde aval est assez active pour déclarer le catalyseur comme mauvais, tandis que si la valeur de l'amplitude maximale ne dépasse pas ce même seuil, le signal de la sonde aval est quasiment plat et le catalyseur est bon.

Il est toutefois préférable de filtrer le signal fourni par la sonde aval de toutes les fréquences supérieures à celle imposée par la régulation de richesse afin que l'activité de la sonde aval ne reflète que les conséquences de la consigne de richesse amont. Un filtre passe-bas du premier ordre dont la fréquence de coupure est égal à la fréquence de l'oscillation de régulation appliquée à la consigne de la richesse amont permet donc de soustraire au signal de la sonde aval toutes les composantes dues aux problèmes d'injection, d'allumage ou d'équilibrage, dont les fréquences d'apparition sont bien plus importantes et qui sinon, fausseraient le calcul de l'amplitude maximale.

Le critère de détection d'état sera alors calculé de la façon suivante pour chaque fenêtre temporelle de diagnostic :

$$critère = \max(tension_{filtrée}) - \min(tension_{filtrée})$$

Soit comme étant la différence entre les valeurs maximale et minimale du signal de tension filtré fourni par la sonde aval.

L'évolution temporelle de ce critère est illustrée à la figure 2 sur chacune des trois fenêtres temporelles de diagnostic F1, F2 et F3, pour chaque signal de tension de la sonde aval illustré à titre d'exemple sur la figure 2 correspondant aux deux états de catalyseur, respectivement l'état peu dégradé et l'état très dégradé.

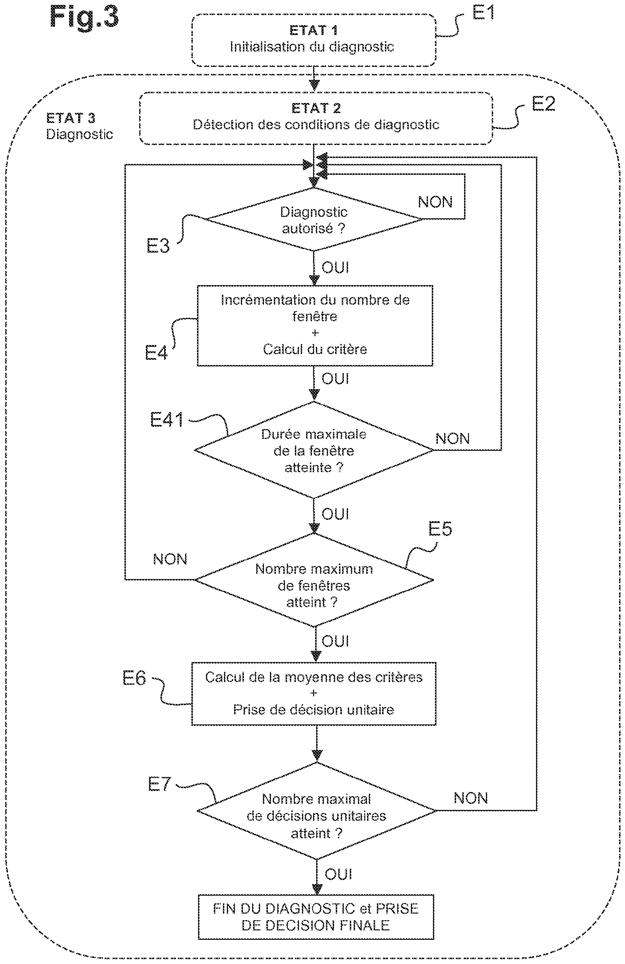

La stratégie de diagnostic va être plus précisément décrite en référence à la figure 3. Après une première étape d'initialisation du diagnostic (étape E1), une détection des conditions de diagnostic est mise en oeuvre (étape E2). Les conditions de déroulement du diagnostic nécessitent en effet que le moteur soit sur un point de fonctionnement constant pour éviter les effets des transitoires. Cependant la durée du diagnostic est tel qu'il permet une fréquence suffisamment élevée pour répondre à l'objectif IUPR (acronyme anglais pour le rapport d'efficacité en service).

Ainsi, si les conditions de diagnostic sont détectées, le diagnostic est autorisé (étape E3) et, à chaque incrémentation du nombre prédéterminé de fenêtres temporelles de diagnostic, on calcule le critère de détection d'état à partir de la variation du signal de la sonde aval pour chaque fenêtre temporelle de diagnostic (étape E4). Plus précisément, la première fenêtre temporelle de diagnostic débute et les valeurs maximale et minimale du signal de la sonde aval filtré sont conservées pour cette première fenêtre temporelle de diagnostic. Lorsque la première fenêtre temporelle de diagnostic se termine (étape E41), le critère de détection d'état est calculé pour cette première fenêtre temporelle de diagnostic et la deuxième fenêtre temporelle de diagnostic débute, où le processus de calcul du critère se répète.

Une fois le nombre de fenêtres maximales atteint (étape E5), la moyenne du critère sur toutes les fenêtres est calculée et cette moyenne est ensuite comparée au seuil de détection pour prise de décision unitaire sur l'efficacité du catalyseur (étape E6).

Selon la calibration choisie (étape E7), une ou plusieurs autres itérations du diagnostic tel qu'il vient d'être décrit sont effectuées afin de rendre le diagnostic plus robuste. Lorsque le nombre maximal de décisions unitaires est atteint, le diagnostic est terminé.

**Revendications**

1. Procédé de diagnostic d'un catalyseur (4) d'un système de traitement (3) des gaz d'échappement équipant une ligne d'échappement (2) d'un moteur (1) à combustion interne à allumage commandé, ledit système étant du type comprenant une première (5) et une seconde (8) sonde à oxygène implantées respectivement en amont et en aval dudit catalyseur (4) dans ladite ligne d'échappement (2), dans lequel on fournit une consigne de régulation de richesse (C1) apte à ajuster la richesse du moteur en fonction du signal fourni par la sonde amont (5) de façon à maintenir un mélange stoechiométrique à l'entrée du catalyseur (4), ledit procédé comprenant des étapes au cours desquelles, pendant le diagnostic :

- on applique une oscillation de régulation (C2) à ladite consigne de régulation (C1) apte à imposer alternativement un mélange riche et un mélange pauvre en amont du catalyseur et dont l'amplitude est calibrée de façon à maintenir la valeur du mélange dans l'intervalle de valeur de la fenêtre catalytique pendant laquelle l'efficacité du catalyseur est maximale ;
- on analyse une variation du signal fourni par la sonde aval (8) pendant l'application de ladite oscillation de régulation (C2) pour diagnostiquer un état de fonctionnement du catalyseur,

le procédé étant **caractérisé en ce que** :

- on établit un nombre prédéterminé de fenêtres temporelles de diagnostic (F1, F2, F3) d'une durée équivalente à la période de ladite oscillation de régulation appliquée à la consigne de régulation ;
- à chaque incrémentation du nombre prédéterminé de fenêtres temporelles de diagnostic, on détermine un critère de détection d'état à partir de la variation du signal fourni par la sonde aval (8) pendant ladite fenêtre temporelle de diagnostic ;
- on calcule une moyenne des critères de détection d'état sur toutes les fenêtres temporelles de diagnostic,
- on compare ladite moyenne à un seuil de détection pour diagnostiquer l'état de fonctionnement du catalyseur,

et **en ce qu'**on mesure l'amplitude maximale du signal fourni par la sonde aval (8) sur chaque fenêtre temporelle de diagnostic pour déterminer le critère de détection d'état sur ladite fenêtre temporelle de diagnostic.

2. Procédé selon la revendication 1, **caractérisé en ce qu'**on filtre passe-bas le signal fourni par la sonde aval (8), on détermine les valeurs maximale et minimale du signal filtré passe-bas pour chaque fenêtre temporelle de diagnostic, et on détermine le critère de détection d'état sur chaque fenêtre temporelle de diagnostic comme la différence entre lesdites valeurs maximale et minimale du signal filtré passe-bas de la sonde aval (8).

3. Procédé selon la revendication 2, **caractérisé en ce que** la fréquence de coupure du filtre passe-bas appliqué au signal fourni par la sonde aval est égale à la fréquence de ladite oscillation de régulation appliquée à la consigne de régulation.

4. Procédé selon l'une quelconque des revendications précédentes, **caractérisé en ce qu'**on réalise au moins une itération du diagnostic.

5. Procédé selon l'une quelconque des revendications précédentes, **caractérisé en ce qu'**on maintient un point de fonctionnement constant du moteur pendant le diagnostic.

6. Procédé selon l'une quelconque des revendications précédentes, **caractérisé en ce que** la période de ladite oscillation de régulation appliquée à la consigne de régulation est fixe.

**Patentansprüche**

1. Verfahren zur Diagnose eines Katalysators (4) eines Systems zur Behandlung (3) der Abgase, mit dem eine Abgasleitung (2) eines Verbrennungsmotors (1) mit Fremdzündung ausgestattet ist, wobei das System von dem Typ ist, der eine erste (5) und eine zweite Sauerstoffsonde (8) umfasst, die jeweils stromauf und stromab des Katalysators (4) in der Abgasleitung (2) eingesetzt sind, wobei ein Regelungs-Sollwert einer Anreicherung (C1) bereitgestellt wird, der geeignet ist, die Anreicherung des Motors in Abhängigkeit von dem Signal einzustellen, das von der stromaufwärtigen Sonde (5) bereitgestellt wird, um ein stöchiometrisches Gemisch am Einlass des Katalysators (4) beizubehalten, das Verfahren umfassend Schritte, bei denen während der Diagnose:

- eine Regelungsschwingung (C2) auf den Regelungs-Sollwert (C1) angewandt wird, die geeignet ist, alternativ ein fettes Gemisch und ein mageres Gemisch stromauf des Katalysators festzulegen, und deren Amplitude so kalibriert ist, dass der Wert des Gemischs im Wertintervalls des katalytischen Fensters beibehalten wird, während welchem die Wirksamkeit des Katalysators maximal ist;

- eine Abweichung des Signals analysiert wird, das von der stromabwärtigen (8) Sonde während der Anwendung der Regelungsschwingung (C2) bereitgestellt wird, um einen Betriebszustand des Katalysators zu diagnostizieren, wobei das Verfahren **dadurch gekennzeichnet ist, dass**:

- eine vorbestimmte Anzahl von Diagnose-Zeitfenstern (F1, F2, F3) einer Dauer, die dem Zeitraum der Regelungsschwingung entspricht, die auf den Regelungs-Sollwert angewandt wird, ermittelt wird;

- bei jeder Inkrementierung der vorbestimmten Anzahl von Diagnose-Zeitfenstern ein Kriterium zur Detektion eines Zustands anhand der Abweichung des Signals bestimmt wird, das von der stromabwärtigen Sonde (8) während des Diagnose-Zeitfensters bereitgestellt wird;

- ein Durchschnitt der Kriterien zur Detektion eines Zustands über alle Diagnose-Zeitfenster berechnet wird,

- der Durchschnitt mit einer Detektionsschwelle verglichen wird, um den Betriebszustand des Katalysators zu diagnostizieren,

und dadurch, dass die maximale Amplitude des Signals, das von der stromabwärtigen Sonde (8) bereitgestellt wird, über jedes Diagnose-Zeitfenster gemessen wird, um das Kriterium zur Detektion eines Zustands über das Diagnose-Zeitfenster zu bestimmen.

2. Verfahren nach Anspruch 1, **dadurch gekennzeichnet, dass** das Signal, das von der stromabwärtigen Sonde (8) bereitgestellt wird, tiefpassgefiltert wird, der maximale und der minimale Wert des tiefpassgefilterten Signals für jedes Diagnose-Zeitfenster bestimmt wird, und das Kriterium zur Detektion eines Zustands über jedes Diagnose-Zeitfenster als die Differenz zwischen dem maximalen und dem minimalen Wert des tiefpassgefilterten Signals der stromabwärtigen Sonde (8) bestimmt wird.

3. Verfahren nach Anspruch 2, **dadurch gekennzeichnet, dass** die Grenzfrequenz des Tiefpassfilters, der auf das Signal angewandt wird, das von der stromabwärtigen Sonde bereitgestellt wird, gleich der Frequenz der Regelungsschwingung ist, die auf den Regelungs-Sollwert angewandt wird.

4. Verfahren nach einem der vorhergehenden Ansprüche, **dadurch gekennzeichnet, dass** mindestens eine Iteration der Diagnose durchgeführt wird.

5. Verfahren nach einem der vorhergehenden Ansprüche, **dadurch gekennzeichnet, dass** während der Diagnose ein konstanter Betriebspunkt des Motors beibehalten wird.

6. Verfahren nach einem der vorhergehenden Ansprüche, **dadurch gekennzeichnet, dass** der Zeitraum der Regelungsschwingung, die auf den Regelungs-Sollwert angewandt wird, fest ist.

**Claims**

1. Method for diagnosing a catalytic converter (4) of an exhaust gas system (3) with which an exhaust line (2) of a controlled ignition combustion engine (1) is equipped, the said system being of the type comprising a first (5) and a second (8) oxygen sensor installed respectively upstream and downstream of the said catalytic converter (4) in the said exhaust line (2), in which method a richness-regulating setpoint (C1) able to adjust the richness of the engine according to the signal supplied by the upstream probe (5) so as to maintain a stoichiometric mixture at the inlet of the catalytic converter (4) is supplied, the said method comprising steps during the course of which, during diagnostics:

- a regulation oscillation (C2) is applied to the said regulation setpoint (C1) and able alternately to impose a rich mixture and a lean mixture upstream of the catalytic converter and the amplitude of which is calibrated so as to keep the value of the mixture within the range of values of the catalytic window during which the efficiency of the catalytic converter is at a maximum;

- a variation in the signal supplied by the downstream probe (8) during application of the said regulation oscillation (C2) is analysed in order to diagnose an operational status of the catalytic converter,

the method being **characterized in that**:

- a predetermined number of diagnostic time windows (F2, F2, F3), of the duration equivalent to the period of the said regulation oscillation applied to the regulation setpoint is established;

- each time the predetermined number of diagnostic time windows is incremented, a status detection criterion is determined from the variation in the signal supplied by the downstream probe (8) during the said diagnostic time window;
- a mean of the status detection criteria across all the diagnostic time windows is calculated,
- the said mean is compared against a detection threshold in order to diagnose the operational status of the catalytic converter,

and **in that** maximum amplitude of the signal supplied by the downstream probe (8) over each diagnostic time window is measured in order to determine the status detection criterion over the said diagnostic time window.

2. Method according to Claim 1, **characterized in that** the signal supplied by the downstream probe (8) undergoes low-pass filtering, the maximum and minimum values of the low-pass filtered signal for each diagnostic time window are determined, and the status detection criterion is determined over each diagnostic time window as being the difference between the said maximum and minimum values of the low-pass filtered signal from the downstream probe (8).

3. Method according to Claim 2, **characterized in that** the cut off frequency of the low-pass filter applied to the signal supplied by the downstream probe is equal to the frequency of the said regulation oscillation applied to the regulation setpoint.

4. Method according to any one of the preceding claims, **characterized in that** at least one iteration of the diagnostics is performed.

5. Method according to any one of the preceding claims, **characterized in that** a constant engine operation point is maintained during the diagnostics.

6. Method according to any one of the preceding claims, **characterized in that** the period of the said regulation oscillation applied to the regulation setpoint is fixed.

**Fig.1**

Richesse amont

C2

C1

1

Temps

**Fig.2**

Tension sonde aval

F1    F2    F3

Catalyseur peu dégradé

Fenêtre 1    Fenêtre 2    Fenêtre 3

Catalyseur très dégradé

Temps

Critère

Détection des conditions    Calcul du critère    Diagnostic effectué

NOK

Seuil de détection

OK

Temps

# Fig.3

FIN DU DIAGNOSTIC et PRISE
DE DECISION FINALE

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2910052
- US 8011173 B
- EP 0823546 A
- US 5945597 A